# NEUE EUROPÄISCHE PATENTSCHRIFT

(11) **EP 1 556 196 B2**
(45) Veröffentlichungstag und Bekanntmachung des Hinweises auf die Entscheidung über den Einspruch: **23.09.2009**
(45) Hinweis auf die Patenterteilung: 10.05.2006
(21) Anmeldenummer: 03753508.5
(22) Anmeldetag: 06.10.2003
(51) Int. Cl.: B27K 5/02, C09D 15/00

(54) **VERWENDUNG VON PIGMENT- UND FARBSTOFFENTHALTENDEN ZUBEREITUNGEN ZUR DEKORATIVEN EINFÄRBUNG VON HOLZWERKSTOFFEN**
USE OF PREPARATIONS COMPRISING PIGMENTS AND DYESTUFFS FOR THE DECORATIVE COLOURING OF DERIVED TIMBER PRODUCTS
UTILISATION DE PREPARATIONS CONTENANT DES PIGMENTS ET DE COLORANTS POUR LA TEINTURE DECORATIVE DE MATERIAUX DERIVES DU BOIS

(30) Priorität: 10.10.2002 DE 10247239
(43) Veröffentlichungstag der Anmeldung: 27.07.2005
(73) Patentinhaber: BASF SE, 67056 Ludwigshafen (DE)
(72) Erfinder: KRÜSEMANN, Juliane, 67069 Ludwigshafen (DE); SIEGLER, Manfred, 67227 Frankenthal (DE); STOHR, Andreas, 67251 Freinsheim (DE); KURTZ, Walter, 67098 Bad Dürkheim (DE)
(74) Vertreter: Huhn, Michael
(86) Internationale Anmeldenummer: PCT/EP2003/011016
(87) Internationale Veröffentlichungsnummer: WO 2004/035276

(56) Entgegenhaltungen:
- EP-A2- 0 049 777
- DE-A- 19 751 448
- DATABASE WPI Section Ch, Week 199023 Derwent Publications Ltd., London, GB; Class A82, AN 1990-175750 XP002276441 & JP 02 116512 A (MATSUSHITA ELECTRIC WORKS LTD), 1. Mai 1990 (1990-05-01)
- PATENT ABSTRACTS OF JAPAN vol. 013, no. 462 (M-881), 19. Oktober 1989 (1989-10-19) & JP 01 180304 A (DANTANI PLYWOOD CO LTD), 18. Juli 1989 (1989-07-18)

## Beschreibung

Die vorliegende Erfindung betrifft die Verwendung von flüssigen Farbmittelzubereitungen, die mindestens ein Pigment und, bezogen auf das Gewicht des Pigments, 0,5 bis 10 Gew.-% mindestens eines Farbstoffs, zur dekorativen Einfärbung von HDF-, MDF- und Spanplatten.

Weiterhin betrifft die Erfindung HDF-, MDF- und Spanplatten, die mit diesen Farbmittelzubereitungen eingefärbt sind.

Im Bereich der Holzwerkstoffe ist insbesondere der Markt an mitteldichten Faserplatten (medium density fibreboard, MDF-Platten) und hochverdichteten Faserplatten (high density fibreboard, HDF-Platten) stark im Anstieg begriffen.

MDF- und HDF-Platten können wie herkömmliche Spanplatten verarbeitet werden. Durch ihren gleichmäßigen Aufbau sind sie aber auch zur Herstellung von profilierten Teilen geeignet und setzen sich deshalb verstärkt im Möbelbau durch. So werden beispielsweise Einrichtungsgegenstände für Räume und für dekorative Zwecke (z.B. im Messebau) sowie auch schon höherwertige Möbel aus diesen Platten gefertigt und anschließend nur noch farblos lackiert oder mit einem farblosen Overlay beschichtet, um die holzartige Struktur sichtbar zu erhalten.

Bislang werden zur Färbung von Span- und MDF-Platten üblicherweise Farbstoffe verwendet, die bei der Plattenproduktion entweder dem Bindemittel zugegeben oder getrennt von diesem vor oder nach der Beleimung auf die Späne/Fasern aufgebracht werden. Als Bindemittel werden Aminoplaste, wie Harnstoff- oder Harnstoff-Melamin-Formaldehydharze, aber auch Isocyanate, wie Diphenylmethan-4,4'-diisocyanat (MDI), allein oder in Kombination mit Aminoplasten eingesetzt. So wird beispielsweise in der EP-A-903 208 die Massefärbung von MDF-Platten mit kationischen oder Direktfarbstoffen beschrieben. Die mit Farbstoffen eingefärbten Faserplatten weisen zwar brillante Farbtöne auf, zeigen jedoch nur eine geringe Lichtechtheit, weshalb sie zur Herstellung längerlebiger Artikel, wie Möbel für den Wohnbereich, wenig geeignet sind.

Werden Pigmente zur Massefärbung von Faserplatten eingesetzt, so werden zwar licht- und temperaturechtere Färbungen erzielt, diese zeigen jedoch nicht die gewünschte Brillanz. So wird unter Verwendung von Rußpräparationen kein dunkles, brillantes Schwarz, sondern nur ein schmutziger Grauton erhalten. Weiterhin ist unter Einsatz einer Blaupigmentpräparation auch keine brillante Blaufärbung zugänglich, vielmehr wird nur ein grünstichiges Blau erhalten, da die gelblich braune Eigenfarbe des Holzes den Blauton zu einem Grünton verschiebt.

In der WO-A-01/24983 wird ein spezielles Verfahren zur Einfärbung von Holz mit Pigmenten vorgeschlagen, bei dem das Holz zunächst in Gegenwart kleiner Mengen eines schwach basischen Salzes und dann einer organischen Säure mit löslichen Pigmentvorläufern behandelt wird, die anschließend thermisch in die entsprechenden Pigmente überführt werden. Dieses Verfahren ist jedoch sehr aufwendig, da es mehrere Verfahrensschritte sowie die separate Herstellung der Pigmentvorläufer erfordert.

In der EP-A-49 777 werden flüssige sowohl pigment- als auch farbstoffhaltige Farbmittelzubereitungen für eine ganze Reihe von Anwendungszwecken beschrieben, u.a. wird dabei auch die Einfärbung von Leimen für Spanplatten erwähnt. Die explizit offenbarten Farbmittelzubereitungen enthalten in der Überzahl einen Überschuß an Farbstoff, mindestens jedoch 30 Gew.-% Farbstoff, bezogen auf das Pigment.

Der Erfindung lag die Aufgabe zugrunde, Farbmittelpräparationen zur Einfärbung von Holzwerkstoffen zur Verfügung zu stellen, die Färbungen mit vorteilhaften Anwendungseigenschaften, insbesondere hoher Brillanz, Lichtechtheit und Temperaturechtheit, erlauben.

Demgemäß wurde die Verwendung von flüssigen Farbmittelzubereitungen, die mindestens ein Pigment und, bezogen auf das Pigment, 0,5 bis 10 Gew.-% mindestens eines Farbstoffs enthalten, zur dekorativen Einfärbung von HDF-, MDF- und Spanplatten gefunden.

Verwendet man diese Farbmittelzubereitungen zur Einfärbung von HDF-, MDF- und Spanplatten, so erhält man kräftige, brillante Farbtöne, weil der Farbstoff aufgrund seiner Affinität zur Holzfaser auf diese aufzieht und damit die Eigenfärbung des Holzes abdeckt. Dadurch kommt der Farbeindruck der Pigmente voll zur Geltung. Überraschenderweise reichen die erfindungsgemäßen geringen Farbstoffmengen dabei aus, um eine homogene kräftige Färbung zu erhalten. Außerdem ist die mit dieser Pigment-Farbstoff-Zubereitung erhaltene Färbung der reinen Farbstoffärbung bezüglich der Lichtechtheit deutlich überlegen, so daß die erfindungsgemäß zu verwendenden Farbmittelzubereitungen hervorragend zur dekorativen Einfärbung von HDF-, MDF- und Spanplatten eingesetzt werden können.

Vorzugsweise enthalten die erfindungsgemäß zu verwendenden Farbmittelzubereitungen (A) mindestens ein Pigment, (B) mindestens einen Farbstoff, (C) mindestens ein Dispergiermittel und (D) Wasser oder ein Gemisch von Wasser und mindestens einem Wasserrückhaltemittel.

Als Komponente (A) können in den erfindungsgemäß zu verwendenden Farbmittelzubereitungen organische oder anorganische Pigmente enthalten sein. Selbstverständlich können die Farbmittelzubereitungen auch Mischungen verschiedener organischer oder verschiedener anorganischer Pigmente oder Mischungen von organischen und anorganischen Pigmenten enthalten.

Die Pigmente liegen bevorzugt in feinteiliger Form vor. Die Pigmente haben dementsprechend üblicherweise mittlere Teilchengrößen von 0,1 bis 5 µm, insbesondere 0,1 bis 3 µm und vor allem 0,1 bis 1 µm.

Bei den organischen Pigmenten handelt es sich üblicherweise um organische Bunt- und Schwarzpigmente. Anorganische Pigmente können ebenfalls Farbpigmente (Bunt-, Schwarz- und Weißpigmente) sowie Glanzpigmente sein.

Im folgenden seien als Beispiele für geeignete organische Farbpigmente genannt:
- Monoazopigmente: C.I. Pigment Brown 25;
   C.I. Pigment Orange 5, 13, 36, 38, 64 und 67;
   C.I. Pigment Red 1, 2, 3, 4, 5, 8, 9, 12, 17, 22, 23, 31, 48:1, 48:2, 48:3, 48:4, 49, 49:1, 51:1, 52:1, 52:2, 53, 53:1, 53:3, 57:1, 58:2, 58:4, 63, 112, 146, 148, 170, 175, 184, 185, 187, 191:1, 208, 210, 245, 247 und 251;
   C.I. Pigment Yellow 1, 3, 62, 65, 73, 74, 97; 120, 151, 154, 168, 181, 183 und 191;
   C.I. Pigment Violet 32;
- Disazopigmente: C.I. Pigment Orange 16, 34, 44 und 72;
   C.I. Pigment Yellow 12, 13, 14, 16, 17, 81, 83, 106, 113, 126, 127, 155, 174, 176, 180 und 188;
- Disazokondensationspigmente: C.I. Pigment Yellow 93, 95 und 128;
   C.I. Pigment Red 144, 166, 214, 220, 221, 242 und 262;
   C.I. Pigment Brown 23 und 41;
- Anthanthronpigmente: C.I. Pigment Red 168;
- Anthrachinonpigmente: C.I. Pigment Yellow 147, 177 und 199;
   C.I. Pigment Violet 31;
- Anthrapyrimidinpigmente: C.I. Pigment Yellow 108;
- Chinacridonpigmente: C.I. Pigment Orange 48 und 49;
   C.I. Pigment Red 122, 202, 206 und 209;
   C.I. Pigment Violet 19;
- Chinophthalonpigmente: C.I. Pigment Yellow 138;
- Diketopyrrolopyrrolpimgente: C.I. Pigment Orange 71, 73 und 81;
   C.I. Pigment Red 254, 255, 264, 270 und 272;
- Dioxazinpigmente: C.I. Pigment Violet 23 und 37;
   C.I. Pigment Blue 80;
- Flavanthronpigmente: C.I. Pigment Yellow 24;
- Indanthronpigmente: C.I. Pigment Blue 60 und 64;
- Isoindolinpigmente: C.I. Pigmente Orange 61 und 69;
   C.I. Pigment Red 260;
   C.I. Pigment Yellow 139 und 185;
- Isoindolinonpigmente: C.I. Pigment Yellow 109, 110 und 173;
- Isoviolanthronpigmente: C.I. Pigment Violet 31;
- Metallkomplexpigmente: C.I. Pigment Red 257;
   C.I. Pigment Yellow 117, 129, 150, 153 und 177;
   C.I. Pigment Green 8;
- Perinonpigmente: C.I. Pigment Orange 43;
   C.I. Pigment Red 194;
- Perylenpigmente: C.I. Pigment Black 31 und 32;
   C.I. Pigment Red 123, 149, 178, 179, 190 und 224;
   C.I. Pigment Violet 29;
- Phthalocyaninpigmente: C.I. Pigment Blue 15, 15:1, 15:2, 15:3, 15:4, 15:6 und 16;
   C.I. Pigment Green 7 und 36;
- Pyranthronpigmente: C.I. Pigment Orange 51;
   C.I. Pigment Red 216;
- Pyrazolochinazolonpigmente: C.I. Pigment Orange 67;
   C.I. Pigment Red 251;
- Thioindigopigmente: C.I. Pigment Red 88 und 181;
   C.I. Pigment Violet 38;
- Triarylcarboniumpigmente: C.I. Pigment Blue 1, 61 und 62;
   C.I. Pigment Green 1;
   C.I. Pigment Red 81, 81:1 und 169;
   C.I. Pigment Violet 1, 2, 3 und 27;
- C.I. Pigment Black 1 (Anilinschwarz);
- C.I. Pigment Yellow 101 (Aldazingelb);
- C.I. Pigment Brown 22.

Geeignete anorganische Farbpigmente sind z.B.:
- Weißpigmente: Titandioxid (C.I. Pigment White 6), Zinkweiß, Farbenzinkoxid; Zinksulfid, Lithopone;
- Schwarzpigmente: Eisenoxidschwarz (C.I. Pigment Black 11), Eisen-Mangan-Schwarz,
   Spinellschwarz (C.I. Pigment Black 27);
   Ruß (C.I. Pigment Black 7);
- Buntpigmente: Chromoxid, Chromoxidhydratgrün; Chromgrün (C.I. Pigment Green 48); Cobaltgrün (C.I. Pigment Green 50); Ultramaringrün;
   Kobaltblau (C.I. Pigment Blue 28 und 36;
   C.I. Pigment Blue 72); Ultramarinblau;
   Manganblau;
   Ultramarinviolett; Kobalt- und Manganviolett;
   Eisenoxidrot (C.I. Pigment Red 101);
   Cadmiumsulfoselenid (C.I. Pigment Red 108); Cersulfid (C.I. Pigment Red 265);
   Molybdatrot (C.I. Pigment Red 104);
   Ultramarinrot;
   Eisenoxidbraun (C.I. Pigment Brown 6 und 7), Mischbraun, Spinell- und Korundphasen (C.I. Pigment Brown 29, 31, 33, 34, 35, 37, 39 und 40), Chromtitangelb (C.I. Pigment Brown 24), Chromorange;
   Cersulfid (C.I. Pigment Orange 75);
   Eisenoxidgelb (C.I. Pigment Yellow 42);
   Nickeltitangelb (C.I. Pigment Yellow 53;
   C.I. Pigment Yellow 157, 158, 159, 160, 161, 162, 163, 164 und 189); Chromtitangelb; Spinellphasen (C.I. Pigment Yellow 119); Cadmiumsulfid und Cadmiumzinksulfid (C.I. Pigment Yellow 37 und 35);
   Chromgelb (C.I. Pigment Yellow 34);
   Bismutvanadat (C.I. Pigment Yellow 184).

Bei den Glanzpigmenten handelt es sich um einphasig oder mehrphasig aufgebaute plättchenförmige Pigmente, deren Farbenspiel durch das Zusammenspiel von Interferenz-, Reflexions- und Absorptionsphänomenen geprägt ist. Als Beispiele seien Aluminiumplättchen und ein- oder mehrfach, insbesondere mit Metalloxiden beschichtete Aluminium-, Eisenoxid- und Glimmerplättchen genannt.

In der Regel enthalten die erfindungsgemäß zu verwendenden Farbmittelzubereitungen 10 bis 70 Gew.-%, vorzugsweise 10 bis 60 Gew.-%, Pigment (A).

Als Komponente (B) enthalten die erfindungsgemäß zu.verwendenden Farbmittelzubereitungen mindestens einen Farbstoff. Geeignet sind dabei insbesondere Farbstoffe, die in Wasser oder einem mit Wasser mischbaren oder in Wasser löslichen organischen Lösungsmittel löslich sind. Bevorzugt weisen die eingesetzten Farbstoffe (B) einen den Pigmenten (A) jeweils vergleichbaren Farbton auf, da auf diese Weise eine besonders intensive Färbung der Holzwerkstoffe erzielbar ist. Es können jedoch auch im Farbton abweichende Farbstoffe (B) eingesetzt werden, wodurch Nuancierungen der Färbung möglich sind.

Geeignet sind insbesondere kationische und anionische Farbstoffe, wobei kationische Farbstoffe bevorzugt sind.

Geeignete kationische Farbstoffe (B) entstammen insbesondere der Di- und Triarylmethan-, Xanthen-, Azo-, Cyanin-, Azacyanin-, Methin-, Acridin-, Safranin-, Oxazin-, Indulin-, Nigrosin- und Phenazin-Reihe, wobei Farbstoffe aus der Azo-, Triarylmethan- und Xanthenreihe bevorzugt sind.

Im einzelnen seien beispielhaft aufgeführt: C.I. Basic Yellow 1, 2 und 37; C.I. Basic Orange 2; C.I. Basic Red 1 und 108; C.I. Basic Blue 1, 7 und 26; C.I. Basic Violet 1, 3, 4, 10, 11 und 49; C.I. Basic Green 1 und 4; C.I. Basic Brown 1 und 4.

Kationische Farbstoffe (B) können auch externe basische Gruppen enthaltende Farbmittel sein. Geeignete Beispiele sind hier C.I. Basic Blue 15 und 161.

Als kationische Farbstoffe (B) können auch die korrespondierenden Farbbasen in Gegenwart von löslich machenden sauren Agenzien eingesetzt werden. Als Beispiele seien genannt: C.I. Solvent Yellow 34; C.I. Solvent Orange 3; C.I. Solvent Red 49; C.I. Solvent Violet 8 und 9; C.I. Solvent Blue 2 und 4; C.I. Solvent Black 7.

Geeignete anionische Farbstoffe sind insbesondere sulfonsäuregruppenhaltige Verbindungen aus der Reihe der Azo-, Anthrachinon-, Metallkomplex-, Triarylmethan-, Xanthen- und Stilbenreihe, wobei Farbstoffe aus der Triarylmethan-, Azo- und Metallkomplex- (vor allem Kupfer-, Chrom- und Kobaltkomplex-) Reihe bevorzugt sind.

Im einzelnen genannt seien beispielsweise: C.I. Acid Yellow 3, 19, 36 und 204; C.I. Acid Orange 7, 8 und 142; C.I. Acid Red 52, 88, 351 und 357; C.I. Acid Violet 17 und 90; C.I. Acid Blue 9, 193 und 199; C.I. Acid Black 194; anionische Chromkomplexfarbstoffe wie C.I. Acid Violet 46, 56, 58 und 65; C.I. Acid Yellow 59; C.I. Acid Orange 44, 74 und 92; C.I. Acid Red 195; C.I. Acid Brown 355 und C.I. Acid Black 52; anionische Kobaltkomplexfarbstoffe wie C.I. Acid Yellow 119 und 204, C.I. Direct Red 80 und 81.

Bevorzugt sind wasserlösliche Farbstoffe.

Als Wasserlöslichkeit vermittelnde Kationen sind dabei insbesondere Alkalimetallkationen, wie Li⁺, Na⁺, K⁺, Ammonium- und substituierte Ammoniumionen, insbesondere Alkanolammoniumionen, zu nennen.

Die erfindungsgemäß zu verwendenden Farbmittelzubereitungen enthalten den Farbstoff (B) im allgemeinen in Mengen von 0,5 bis 10 Gew.-%, vorzugsweise 1 bis 8 Gew.-%, jeweils bezogen auf das Pigment (A). Bezogen auf das Gesamtgewicht der Zubereitung, entspricht dies Mengen von in der Regel 0,05 bis 7 Gew.-%, vor allem 0,1 bis 5,6 Gew.-%.

Bevorzugte Pigment/Farbstoff-Kombinationen sind z.B.: C.I. Pigment Pigment Blue 15:1 und C.I. Basic Violet 4; C.I. Pigment Green 7 und C.I. Basic Green 4; C.I. Pigment Red 48:2 und C.I. Direct Red 80; C.I. Pigment Black 7 und C.I. Basic Violet 3.

Als Komponente (C) ist in den erfindungsgemäß zu verwendenden Farbmittelzubereitungen mindestens ein Dispergiermittel enthalten.

Besonders geeignete Dispergiermittel (C) sind nichtionische und anionische oberflächenaktive Additive sowie auch Mischungen dieser Additive.

Bevorzugte nichtionische oberflächenaktive Additive (C) basieren insbesondere auf Polyethern.

Neben den ungemischten Polyalkylenoxiden, bevorzugt C₂-C₄-Alkylenoxiden und phenylsubstituierten C₂-C₄-Alkylenoxiden, insbesondere Polyethylenoxiden, Polypropylenoxiden und Poly(phenylethylenoxiden), sind vor allem Blockcopolymere, insbesondere Polypropylenoxid- und Polyethylenoxidblöcke oder Poly(phenylethylenoxid)- und Polyethylenoxidblöcke aufweisende Polymere, und auch statistische Copolymere dieser Alkylenoxide geeignet.

Diese Polyalkylenoxide können durch Polyaddition der Alkylenoxide an Startermoleküle, wie an gesättigte oder ungesättigte aliphatische und aromatische Alkohole, Phenol oder Naphthol, das jeweils durch Alkyl, insbesondere C₁-C₁₂-Alkyl, vorzugsweise C₄-C₁₂- bzw. C₁-C₄-Alkyl, substituiert sein kann, gesättigte oder ungesättigte aliphatische und aromatische Amine, gesättigte oder ungesättigte aliphatische Carbonsäuren und Carbonsäureamide hergestellt werden. Üblicherweise werden 1 bis 300 mol, bevorzugt 3 bis 150 mol, Alkylenoxid je mol Startermolekül eingesetzt.

Geeignete aliphatische Alkohole enthalten dabei in der Regel 6 bis 26 C-Atome, bevorzugt 8 bis 18 C-Atome, und können unverzweigt, verzweigt oder cyclisch aufgebaut sein. Als Beispiele seien Octanol, Nonanol, Decanol, Isodecanol, Undecanol, Dodecanol, 2-Butyloctanol, Tridecanol, Isotridecanol, Tetradecanol, Pentadecanol, Hexadecanol (Cetylalkohol), 2-Hexyldecanol, Heptadecanol, Octadecanol (Stearylalkohol), 2-Heptylundecanol, 2-Octyldecanol, 2-Nonyltridecanol, 2-Decyltetradecanol, Oleylalkohol und 9-Octadecenol sowie auch Mischungen dieser Alkohole, wie C₈/C₁₀-, C₁₃/C₁₅- und C₁₆/C₁₈-Alkohole, und Cyclopentanol und Cyclohexanol genannt. Von besonderem Interesse sind die gesättigten und ungesättigten Fettalkohole, die durch Fettspaltung und Reduktion aus natürlichen Rohstoffen gewonnen werden, und die synthetischen Fettalkohole aus der Oxosynthese. Die Alkylenoxidaddukte an diese Alkohole weisen üblicherweise mittlere Molekulargewichte Mₙ von 200 bis 5000 auf.

Als Beispiele für die obengenannten aromatischen Alkohole seien neben unsubstituiertem Phenol und α- und β-Naphthol Hexylphenol, Heptylphenol, Octylphenol, Nonylphenol, Isononylphenol, Undecylphenol, Dodecylphenol, Di- und Tributylphenol und Dinonylphenol genannt.

Geeignete aliphatische Amine entsprechen den oben aufgeführten aliphatischen Alkoholen. Besondere Bedeutung haben auch hier die gesättigten und ungesättigten Fettamine, die vorzugsweise 14 bis 20 C-Atome aufweisen. Als aromatische Amine seien beispielsweise Anilin und seine Derivate genannt.

Als aliphatische Carbonsäuren eignen sich insbesondere gesättigte und ungesättigte Fettsäuren, die bevorzugt 14 bis 20 C-Atome enthalten, und hydrierte, teilhydrierte und unhydrierte Harzsäuren sowie auch mehrwertige Carbonsäuren, z.B. Dicarbonsäuren, wie Maleinsäure.

Geeignete Carbonsäureamide leiten sich von diesen Carbonsäuren ab.

Neben den Alkylenoxidaddukten an die einwertigen Amine und Alkohole sind die Alkylenoxidaddukte an mindestens bifunktionelle Amine und Alkohole von ganz besonderem Interesse.

Als mindestens bifunktionelle Amine sind zwei- bis fünfwertige Amine bevorzugt, die insbesondere der Formel H₂N-(R-NR¹)ₙ-H (R: C₂-C₆-Alkylen; R¹: Wasserstoff oder C₁-C₆-Alkyl; n: 1 bis 5) entsprechen. Im einzelnen seien beispielhaft genannt: Ethylendiamin, Diethylentriamin, Triethylentetramin, Tetraethylenpentamin, Propylendiamin-1,3, Dipropylentriamin, 3-Amino-1-ethylen-aminopropan, Hexamethylendiamin, Dihexamethylentriamin, 1,6-Bis-(3-aminopropylamino)hexan und N-Methyldipropylentriamin, wobei Hexamethylendiamin und Diethylentriamin besonders bevorzugt sind und Ethylendiamin ganz besonders bevorzugt ist.

Vorzugsweise werden diese Amine zunächst mit Propylenoxid und anschließend mit Ethylenoxid umgesetzt. Der Gehalt der Blockcopolymere an Ethylenoxid liegt üblicherweise bei etwa 10 bis 90 Gew.-%.

Die Blockcopolymere auf Basis mehrwertiger Amine weisen in der Regel mittlere Molekulargewichte Mₙ von 1000 bis 40 000, vorzugsweise 1500 bis 30 000, auf.

Als mindestens bifunktionelle Alkohole sind zwei- bis fünfwertige Alkohole bevorzugt. Beispielsweise seien C₂-C₆-Alkylenglykole und die entsprechenden Di- und Polyalkylenglykole, wie Ethylenglykol, Propylenglykol-1,2 und -1,3, Butylenglykol-1,2 und -1,4, Hexylenglykol-1,6, Dipropylenglykol und Polyethylenglykol, Glycerin und Pentaerythrit genannt, wobei Ethylenglykol und Polyethylenglykol besonders bevorzugt und Propylenglykol und Dipropylenglykol ganz besonders bevorzugt sind.

Besonders bevorzugte Alkylenoxidaddukte an mindestens bifunktionelle Alkohole weisen einen zentralen Polypropylenoxidblock auf, gehen also von einem Propylenglykol oder Polypropylenglykol aus, das zunächst mit weiterem Propylenoxid und dann mit Ethylenoxid umgesetzt wird. Der Gehalt der Blockcopolymere an Ethylenoxid liegt üblicherweise bei 10 bis 90 Gew.-%.

Die Blockcopolymere auf Basis mehrwertiger Alkohole weisen im allgemeinen mittlere Molekulargewichte Mₙ von 1000 bis 20 000, vorzugsweise 1000 bis 15 000, auf.

Derartige Alkylenoxidblockcopolymere sind bekannt und im Handel z.B. unter den Namen Tetronic® und Pluronic® (BASF) erhältlich.

Anionische oberflächenaktive Additive (C) basieren insbesondere auf Sulfonaten, Sulfaten, Phosphonaten oder Phosphaten.

Beispiele für geeignete Sulfonate sind aromatische Sulfonate, wie p-C₈-C₂₀-Alkylbenzolsulfonate, Di-(C₁-C₈-alkyl)naphthalinsulfonate und Kondensationsprodukte von Naphthalinsulfonsäuren mit Formaldehyd, und aliphatische Sulfonate, wie C₁₂-C₁₈-Alkansulfonate, α-Sulfofettsäure-C₂-C₈-alkylester, Sulfobernsteinsäureester und Alkoxy-, Acyloxy- und Acylaminoalkansulfonate.

Bevorzugt sind Arylsulfonate, wobei die Di-(C₁-C₈-alkyl)naphthalinsulfonate besonders bevorzugt sind. Ganz besonders bevorzugt sind Diisobutyl- und Diisopropylnaphthalinsulfonat.

Beispiele für geeignete Sulfate sind C₈-C₂₀-Alkylsulfate.

Eine weitere wichtige Gruppe anionischer oberflächenaktiver Additive (C) bilden die Sulfonate, Sulfate, Phosphonate und Phosphate der als nichtionische Additive genannten Polyether.

Diese können durch Umsetzung mit Phosphorsäure, Phosphorpentoxid und Phosphonsäure bzw. Schwefelsäure und Sulfonsäure in die Phosphorsäuremono- oder -diester und Phosphonsäureester bzw. die Schwefelsäuremonoester und Sulfonsäureester überführt werden. Diese sauren Ester liegen, wie die weiter oben aufgeführten Sulfonate und Sulfate, bevorzugt in Form wasserlöslicher Salze, insbesondere als Alkalimetallsalze, vor allem Natriumsalze, und Ammoniumsalze vor, sie können jedoch auch in Form der freien Säuren eingesetzt werden.

Bevorzugte Phosphate und Phosphonate leiten sich vor allem von alkoxylierten, insbesondere ethoxylierten, Fett- und Oxoalkoholen, Alkylphenolen, Fettaminen, Fettsäuren und Harzsäuren ab, bevorzugte Sulfate und Sulfonate basieren insbesondere auf alkoxylierten, vor allem ethoxylierten, Fettalkoholen, Alkylphenolen und Aminen, auch mehrwertigen Aminen, wie Hexamethylendiamin.

Derartige anionische oberflächenaktive Additive sind bekannt und im Handel z.B. unter den Namen Nekal® (BASF), Tamol® (BASF), Crodafos® (Croda), Rhodafac® (Rhodia), Maphos® (BASF), Texapon® (Cognis), Empicol® (Albright & Wilson), Matexil® (ICI), Soprophor® (Rhodia) und Lutensit® (BASF) erhältlich.

Weitere geeignete anionische oberflächenaktive Additive (C) basieren auf wasserlöslichen carboxylatgruppenhaltigen Polymeren. Diese können durch Einstellung des Verhältnisses zwischen enthaltenen polaren und unpolaren Gruppierungen vorteilhaft an den jeweiligen Anwendungszweck und das jeweilige Pigment angepaßt werden können.

Monomere, die zur Herstellung dieser Additive eingesetzt werden, sind insbesondere ethylenisch ungesättigte Monocarbonsäuren, ethylenisch ungesättigte Dicarbonsäuren sowie Vinylderivate, die keine Säurefunktion aufweisen.

Als Beispiele für diese Monomergruppen seien genannt:
- Acrylsäure, Methacrylsäure und Crotonsäure;
- Maleinsäure, Maleinsäurenanhydrid, Maleinsäuremonoester, Maleinsäuremonoamide, Umsetzungsprodukte von Maleinsäure mit Diaminen, die zu aminoxidgruppenhaltigen Derivaten oxidiert sein können, und Fumarsäure, wobei Maleinsäure, Maleinsäureanhydrid und Maleinsäuremonoamide bevorzugt sind;
- Vinylaromaten, wie Styrol, Methylstyrol und Vinyltoluol; Ethylen, Propylen, Isobuten; Vinylester linearer oder verzweigter Monocarbonsäuren, wie Vinylacetat und Vinylpropionat; Alkylester und Arylester ethylenisch ungesättigter Monocarbonsäuren, insbesondere Acrylsäure- und Methacrylsäureester, wie Methyl-, Ethyl-, Propyl-, Isopropyl-, Butyl-, Pentyl-, Hexyl-, 2-Ethylhexyl-, Nonyl-, Lauryl- und Hydroxyethyl(meth)acrylat sowie Phenyl-, Naphthyl- und Benzyl(meth)acrylat; Dialkylester von ethylenisch ungesättigten Dicarbonsäuren, wie Dimethyl-, Diethyl-, Dipropyl-, Diisopropyl-, Dibutyl-, Dipentyl-, Dihexyl-, Di-2-ethylhexyl-, Dinonyl-, Dilauryl- und Di-2-hydroxyethylmaleinat und -fumarat; Vinylpyrrolidon; Acrylnitril und Methacrylnitril, wobei Styrol bevorzugt ist.

Neben Homopolymeren dieser Monomere, insbesondere Polyacrylsäuren, sind vor allem Copolymere der genannten Monomere als Additiv (C) geeignet. Bei den Copolymeren kann es sich um statistische Copolymere, Blockcopolymere und Pfropfcopolymere handeln.

Vorzugsweise liegen die Carboxylgruppen der polymeren Additive (C) zumindest teilweise in Salzform vor, um Wasserlöslichkeit zu gewährleisten. Geeignet sind beispielsweise Alkalimetallsalze, wie Natrium- und Kaliumsalze, und Ammoniumsalze.

Üblicherweise weisen die polymeren Additive (C) mittlere Molekulargewichte M_{w} von 1000 bis 250 000 auf, die Säurezahl beträgt in der Regel 40 bis 800.

Beispiele für bevorzugte polymere Additive (C) sind Polyacrylsäuren sowie Styrol/Acrylsäure-, Acrylsäure/Maleinsäure-, Butadien/Acrylsäure- und Styrol/Maleinsäure-Copolymere, die jeweils als zusätzliche Monomerbestandteile Acrylsäureester und/oder Maleinsäureester enthalten können.

Besonders bevorzugte polymere Additive (C) sind Polyacrylsäuren, die in der Regel mittlere Molekulargewichte M_{w} von 1000 bis 250 000 und Säurezahlen von ≥ 200 aufweisen, und Styrol/Acrylsäure-Copolymere, die im allgemeinen mittlere Molekulargewichte M_{w} von 1000 bis 50 000 und Säurezahlen von ≥ 50 aufweisen.

Derartige anionische oberflächenaktive Additive sind ebenfalls bekannt und im Handel z.B. unter den Namen Sokalan® (BASF), Joncryl® (Johnson Polymer), Neoresin® (Avecia) sowie Orotan® und Morez® (Rohm & Haas) erhältlich.

Die erfindungsgemäß zu verwendenden Farbmittelzubereitungen weisen üblicherweise einen Gehalt an Dispergiermittel (C) von 1 bis 50 Gew.-%, insbesondere von 1 bis 40 Gew.-%, auf.

Wasser bildet das flüssige Trägermaterial der erfindungsgemäß zu verwendenden Farbmittelzubereitungen.

Vorzugsweise enthalten die Farbmittelzubereitungen ein Gemisch von Wasser und einem Wasserrückhaltemittel als flüssige Phase. Als Wasserrückhaltemittel dienen insbesondere organische Lösungsmittel, die schwer verdampfbar sind (d. h. in der Regel einen Siedepunkt > 100°C haben), daher wasserrückhaltend wirken, und in Wasser löslich oder mit Wasser mischbar sind.

Beispiele für geeignete Wasserrückhaltemittel sind mehrwertige Alkohole, bevorzugt unverzweigte und verzweigte mehrwertige Alkohole mit 2 bis 8, insbesondere 3 bis 6, C-Atomen, wie Ethylenglykol, 1,2- und 1,3-Propylenglykol, Glycerin, Erythrit, Pentaerythrit, Pentite, wie Arabit, Adonit und Xylit, und Hexite, wie Sorbit, Mannit und Dulcit. Weiterhin eignen sich z.B. auch Di-, Tri- und Tetraalkylenglykole und deren Mono- (vor allem C₁-C₆-, insbesondere C₁-C₄-)alkylether. Beispielhaft seien Di-, Tri- und Tetraethylenglykol, Diethylenglykolmonomethyl-, -ethyl-, -propyl-und -butylether, Triethylenglykolmonomethyl-, -ethyl-, -propyl-und -butylether, Di-, Tri- und Tetra-1,2- und -1,3-propylenglykol und Di-, Tri- und Tetra-1,2- und -1,3-propylenglykolmonomethyl-, -ethyl-, -propyl- und -butylether genannt.

In der Regel enthalten die erfindungsgemäß zu verwendenden Farbmittelzubereitungen 10 bis 88,95 Gew.-%, vorzugsweise 10 bis 80 Gew.-%, flüssige Phase (D). Liegt Wasser im Gemisch mit einem wasserrückhaltenden organischen Lösungsmittel vor, so macht dieses Lösungsmittel im allgemeinen 1 bis 80 Gew.-%, bevorzugt 1 bis 60 Gew.-%, der Phase (D) aus.

Weiterhin können die Farbmittelzubereitungen noch übliche Zusatzstoffe, wie Biozide, Entschäumer, Antiabsetzmittel und Rheologiemodifizierer, enthalten, deren Anteil im allgemeinen bis zu 5 Gew.-% betragen kann.

Die erfindungsgemäß zu verwendenden Farbmittelzubereitungen können auf verschiedene Weise erhalten werden. Vorzugsweise wird zunächst eine Pigmentdispersion hergestellt, der der Farbstoff dann als Feststoff oder insbesondere in gelöster Form zugegeben wird.

Die Farbmittelzubereitungen eignen sich hervorragend zur Einfärbung von Holzwerkstoffen jeder Art. Von besonderem Interesse ist die Einfärbung von MDF-, HDF- und Spanplatten.

Die erfindungsgemäß zu verwendenden Farbmittelzubereitungen können dabei dem als Basis für die MDF-, HDF- und Spanplatten dienenden Gemisch aus Holzfasern bzw. -spänen und Bindemittel auf verschiedene Weise und an verschiedenen Stellen des Fabrikationsprozesses zugesetzt werden.

Bei Verwendung von auf Aminoplasten, wie Harnstoff- und Harnstoff-Melamin-Formaldehydharzen, basierenden Bindemitteln können die Farbmittelzubereitungen zusammen mit dem Bindemittel, das üblicherweise in Form einer weitere Zusatzstoffe, wie Härter und Paraffin-Dispersionen, enthaltenden Dispersion eingesetzt wird, oder getrennt von dem Bindemittel vor oder nach der Beleimung auf die Holzfasern bzw. -späne aufgebracht werden. Beim Einsatz von Isocyanaten (MDI) als Bindemittel werden die Farbmittelzubereitungen getrennt vom Bindemittel eingesetzt. Bei Kombinationsverleimungen mit Aminoplasten und Isocyanaten können die Farbmittelzubereitungen gewünschtenfalls der Aminoplastkomponente zugesetzt werden.

Bei der Spanplattenherstellung erfolgt die Beleimung der vorher getrockneten Späne in kontinuierlichen Mischern. Meist werden verschiedene Spanfraktionen in getrennten Mischern unterschiedlich beleimt und dann getrennt (Mehrschichtplatten) oder gemeinsam geschüttet. Dabei können alle Spanfraktionen oder nur die Späne für die äußeren oder die inneren Schichten gefärbt werden.

Bei der MDF- und HDF-Plattenherstellung werden die Fasern nach dem Refiner in der Blowline beleimt. Die beleimten Fasern durchlaufen dann einen Trockner, in dem sie auf Feuchten von 7 bis 13 Gew.-% getrocknet werden. Vereinzelt werden die Fasern auch erst getrocknet und nachträglich in speziellen kontinuierlichen Mischern beleimt. Auch eine Kombination aus Blowline und Mischerbeleimung ist möglich.

Zur Fertigstellung der Platten werden die beleimten Späne bzw. Fasern dann zu Matten geschüttet, gewünschtenfalls kalt vorverdichtet und in beheizten Pressen bei Temperaturen von 170 bis 240°C zu Platten gepreßt.

Mit Hilfe der erfindungsgemäß zu verwendenden Farbmittelzubereitungen gelingt die Massefärbung von Holzwerkstoffen auf vorteilhafte Weise. Es werden durchgehende, homogene, brillante, farbstarke sowie licht- und temperaturechte Färbungen auch in dem bislang nicht zugänglichen blauen Farbtonbereich erzielt.

Besondere Effekte können durch mehrfarbige Einfärbung der Platten erhalten werden. Z.B. können verschieden gefärbte Fasern schichtweise verpreßt werden. Auf diese Weise kann eine zur Kennzeichnung der Platte dienende Farbschicht (z.B. grün für Feuchtigkeitsbeständigkeit, rot für Feuerfestigkeit) im Innern der Platte verborgen und nach außen durch wunschgemäß gefärbte Ober- und Unterschichten abgedeckt werden. Besonders attraktive Farbeffekte sind durch Mischen verschieden gefärbter Fasern und anschließendes Verpressen erzielbar. Hierbei können marmorierte Platten erhalten werden, die zu individuellen Holzwerkstoffen werden. Mit diesen marmorierten Platten können z.B. einmalige Möbelstücke, Werbeartikel und Spielzeuge hergestellt werden. Zusätzlich können noch verschiedene andere Materialien, z.B. andere Holzfasern und Holzabfallprodukte, wie Rinde, eingearbeitet werden, die besondere Strukturen und Effekte ergeben.

Weiterhin können durch Einfärbung mit elektrisch leitfähigen Ruß enthaltenden Farbmittelzubereitungen auch elektrisch leitfähige MDF- und Spanplatten hergestellt werden, die z.B. für elektrisch leitfähige Fußböden und Arbeitsplatten von Interesse sind. Außerdem sind elektrisch leitfähige Platten durch elektrostatische Pulversprühverfahren lackierbar.

### Beispiele

### 1. Herstellung der Farbmittelzubereitungen

Für die Einfärbung der Span- und Faserplatten wurden folgende Farbmittelzubereitungen eingesetzt.

### 1.1. Grüne Farbmittelzubereitung (nicht erfindungsgemäß)

Mischung aus 25 Gew.-% einer grünen Pigmentzubereitung, die durch Naßmahlung in einer Rührwerkskugelmühle aus

| | |
|---|---|
| 40 Gew.-% | C.I. Pigment Green 7 |
| 8 Gew.-% | eines Blockcopolymers auf Basis Ethylendiamin/Propylenoxid/Ethylenoxid mit einem Ethylenoxidgehalt von 40 Gew.-% und einem mittleren Molekulargewicht Mₙ von 6 500 |
| 15 Gew.-% | Dipropylenglykol |
| 37 Gew.-% | Wasser |

hergestellt wurde, und 7 Gew.-% einer 47 gew.-%igen Lösung von C.I. Basic Green 7 in 48 gew.-%iger Essigsäure und 68 Gew.-% Wasser.

### 1.2. Rote Farbmittelzubereitung (nichterfindungsgemäß)

Durch Naßmahlung in einer Rührwerkskugelmühle erhaltene Mischung aus

| | |
|---|---|
| 26 Gew.-% | C.I. Pigment Red 48:2 |
| 5 Gew.-% | C.I. Direct Red 80 |
| 24 Gew.-% | einer 26 gew.-%igen ammoniakalischen Lösung eines Acrylsäure/Styrol-Copolymers mit einer Säurezahl von 216 mg KOH/g und einem mittleren Molekulargewicht Mₙ von 9 200 |
| 5 Gew.-% | Dipropylenglykol |
| 40 Gew.-% | Wasser. |

### 1.3. Schwarze Farbmittelzubereitung

Mischung aus 94 Gew.-% einer schwarzen Pigmentzubereitung, die durch Naßmahlung in einer Rührwerkskugelmühle aus

| | |
|---|---|
| 40 Gew.-% | C.I. Pigment Black 7 |
| 10 Gew.-% | eines Blockcopolymers auf Basis Ethylendiamin/Propylenoxid/Ethylenoxid mit einem Ethylenoxidgehalt von 40 Gew.-% und einem mittleren Molekulargewicht Mₙ von 12 000 |
| 22 Gew.-% | Dipropylenglykol |
| 28 Gew.-% | Wasser |

hergestellt wurde, und 6 Gew.-% einer 10 gew.-%igen Lösung von C.I. Basic Violet 3 in 30 gew.-%iger Essigsäure.

### 1.4. Blaue Farbmittelzubereitung

Mischung aus 90 Gew.-% einer blauen Pigmentzubereitung, die durch Naßmahlung in einer Rührwerkskugelmühle aus

| | |
|---|---|
| 40 Gew.-% | C.I. Pigment Blue 15:1 |
| 8 Gew.-% | eines Blockcopolymers auf Basis Ethylendiamin/Propylenoxid/Ethylenoxid mit einem Ethylenoxidgehalt von 40 Gew.-% und einem mittleren Molekulargewicht Mₙ von 6 700 |
| 10 Gew.-% | Dipropylenglykol |
| 42 Gew.-% | Wasser |

hergestellt wurde, und 10 Gew.-% einer 10 gew.-%igen Lösung von C.I. Basic Violet 4 in 30 gew.-%iger Essigsäure.

### 1.5. Leitfähige schwarze Farbmittelzubereitung

Mischung aus 98 Gew.-% einer schwarzen Pigmentzubereitung, die durch Naßmahlung in einer Rührwerkskugelmühle aus

| | |
|---|---|
| 20 Gew.-% | leitfähigem Ruß |
| 10 Gew.-% | eines Blockcopolymers auf Basis Ethylendiamin/Propylenoxid/Ethylenoxid mit einem Ethylenoxidgehalt von 40 Gew.-% und einem mittleren Molekulargewicht Mₙ von 12 000 |
| 70 Gew.-% | Wasser |

hergestellt wurde, und 2 Gew.-% einer 10 gew.-%igen Lösung von C.I. Basic Violet 3 in 30 gew.-%iger Essigsäure.

### 2. Herstellung von gefärbten Spanplatten

Für die Herstellung der Spanplatten wurden, soweit nicht anders angegeben, die in Tabelle 1 und 2 aufgeführten Leimansätze verwendet:

**Tabelle 1**

| Leimansatz für | Mittelschichtspäne | Deckschichtspäne |
|---|---|---|
| Harnstoff-Melamin-Form-aldehydharz, 66,5 gew.-%ig in Wasser | 100,0 Gew.-Tle. | 100,0 Gew.-Tle. |
| Paraffin-Dispersion, 60 gew.-%ig in Wasser | 5,0 Gew.-Tle. | 4,3 Gew.-Tle. |
| Ammoniumsulfatlösung, 25 gew.-%ig in Wasser | 10,0 Gew.-Tle. | 2,0 Gew.-Tle. |
| Farbmittelzubereitung und Wasser | 10,6 Gew.-Tle. | 26,7 Gew.-Tle. |
| | | |
| Festharzgehalt der Flotte | 53 Gew.-% | 50 Gew.-% |
| Festharz/atro Späne | 11 Gew.-% | 13 Gew.-% |
| Flotte auf 100 kg atro Späne | 20,8 kg | 26,0 kg |

**Tabelle 2**

| Leimansatz für | Mittelschichtspäne | Deckschichtspäne |
|---|---|---|
| Harnstoff-Melamin-Form-aldehydharz, 66,5 gew.-%ig in Wasser | 100,0 Gew.-Tle. | 100,0 Gew.-Tle. |
| Paraffin-Dispersion, 60 gew.-%ig in Wasser | 6,9 Gew.-Tle. | 5,0 Gew.-Tle. |
| Ammoniumsulfatlösung, 25% gew.%-ig in Wasser | 10,0 Gew.-Tle. | 2,0 Gew.-Tle. |
| Farbmittelzubereitung Nr. 1.5 | 29,6 Gew.-Tle. | 24,2 Gew.-Tle. |
| Wasser | - | 1,8 Gew.-Tle. |
| | | |
| Festharzgehalt der Flotte | 45,4 Gew.-% | 50 Gew.-% |
| Festharz/atro Späne | 8 Gew.-% | 11 Gew.-% |
| Flotte auf 100 kg atro Späne | 17,6 kg | 22,0 kg |

### 2.1. Herstellung einer grün gefärbten Spanplatte

Es wurde der Leimansatz aus Tabelle 1 verwendet, wobei dem Ansatz für die Mittelschichtspäne 1,8 Gew.-Tle. und dem Ansatz für die Deckschichtspäne 1,5 Gew.-Tle. der Farbmittelzubereitung Nr. 1.1 zugegeben wurden.

Nach der Beleimung wurden die Späne zu einer dreischichtigen Matte geschüttet, vorverdichtet und bei 200°C zu einer Platte gepreßt.

Die erhaltene Spanplatte zeigte eine homogene, brillante, lichtechte Grünfärbung.

### 2.2. Herstellung einer grün gefärbten Spanplatte mit isocyanatgebundener Mittelschicht

Die Deckschichtspäne wurden analog zu 2.1 beleimt. Die Mittelschichtspäne wurden mit 3,5 Gew.-% Isocyanat (MDI), das unmittelbar vor der Beleimung in Wasser (Gew.-Verhältnis 1:1) emulgiert wurde, beleimt. Getrennt davon wurden den Mittelschichtspänen 0,3 Gew.-% der Farbmittelzubereitung Nr. 1.1, 0,8 Gew.-% der Paraffin-Dispersion und 4 Gew.-% Wasser zugemischt.

Nach der Beleimung wurden die Späne zu einer dreischichtigen Matte geschüttet, vorverdichtet und bei 200°C zu einer Platte gepreßt.

Die erhaltene Spanplatte zeigte eine homogene, brillante, lichtechte Grünfärbung.

### 2.3. Herstellung einer rot gefärbten Spanplatte

Es wurde der Leimansatz aus Tabelle 1 verwendet, wobei dem Ansatz für die Mittelschichtspäne 1,8 Gew.-Tle. und dem Ansatz für die Deckschichtspäne 1,5 Gew.-Tle. der Farbmittelzubereitung Nr. 1.2 zugegeben wurden.

Nach der Beleimung wurden die Späne zu einer dreischichtigen Matte geschüttet, vorverdichtet und bei 200°C zu einer Platte gepreßt.

Die erhaltene Spanplatte zeigte eine homogene, brillante, lichtechte Rotfärbung.

### 2.4. Herstellung einer blau gefärbten Spanplatte .

Es wurde der Leimansatz aus Tabelle 1 verwendet, wobei dem Ansatz für die Mittelschichtspäne 2,4 Gew.-Tle. und dem Ansatz für die Deckschichtspäne 2,0 Gew.-Tle. der Farbmittelzubereitung Nr. 1.4 zugegeben wurden.

Nach der Beleimung wurden die Späne zu einer dreischichtigen Matte geschüttet, vorverdichtet und bei 200°C zu einer Platte gepreßt.

Die erhaltene Spanplatte zeigte eine homogene, brillante, lichtechte Blaufärbung.

### 2.5. Herstellung einer schwarz gefärbten, leitfähigen Spanplatte

Es wurde der Leimansatz aus Tabelle 2 verwendet.

Nach der Beleimung wurden die Späne zu einer dreischichtigen Matte geschüttet, vorverdichtet und bei 200°C zu einer Platte gepreßt.

Die erhaltene Spanplatte zeigte eine homogene, brillante, lichtechte Schwarzfärbung und hatte einen spezifischen Durchgangswiderstand von 3 x 10⁵ Ωcm sowie einen Oberflächenwiderstand von 4 x 10⁶ Ωcm.

### 3. Herstellung von gefärbten MDF-Platten

Für die Herstellung der MDF-Platten wurden, soweit nicht anders angegeben, die in Tabelle 3 und 4 aufgeführten Leimansätze verwendet:

**Tabelle 3**

| | |
|---|---|
| Harnstoff-Melamin-Formaldehyd-harz, 66,5%ig in Wasser | 100,0 Gew.-Tle. |
| Paraffin-Dispersion, 60%ig in Wasser | 4,0 Gew.-Tle. |
| Farbmittelzubereitung und Wasser | 54,3 Gew.-Tle. |
| | |
| Festharzgehalt der Flotte | 42% |
| Festharz/atro Fasern | 14% |
| Flotte auf 100 kg atro Fasern | 33,3 kg |

**Tabelle 4**

| | |
|---|---|
| Harnstoff-Melamin-Formaldehyd-harz, 66,5%ig in Wasser | 100,0 Gew.-Tle. |
| Paraffin-Dispersion, 60%ig in Wasser | 4,0 Gew.-Tle. |
| Farbmittelzubereitung Nr. 1.5 | 19,0 Gew.-Tle. |
| Wasser | 35,3 Gew.-Tle. |
| | |
| Festharzgehalt der Flotte | 42% |
| Festharz/atro Fasern | 14% |
| Flotte auf 100 kg atro Fasern | 33,3 kg |

### 3.1. Herstellung einer schwarz gefärbten MDF-Platte

Dem Leimansatz aus Tabelle 3 wurden 19,0 Gew.-Tle. der Farbmittelzubereitung Nr. 1.3 zugegeben.

Die beleimten Fasern wurden anschließend in einem Trockner auf eine Feuchte von ca. 8 Gew.-% getrocknet, zu einer Matte geschüttet, vorverdichtet und bei 220°C zu einer Platte gepreßt.

Die erhaltene MDF-Platte zeigte eine homogene, brillante, lichtechte Schwarzfärbung.

### 3.2. Herstellung einer schwarz gefärbten, isocyanatgebundenen MDF-Platte

Die Fasern wurden mit 3,5 Gew.-% Isocyanat (MDI), das unmittelbar vor der Beleimung in Wasser (Gew.-Verhältnis 1:1) emulgiert wurde, beleimt. Getrennt davon wurden den Fasern 4 Gew.-% der Farbmittelzubereitung Nr. 1.3 und 0,8 Gew.-% der Paraffin-Dispersion zugemischt.

Die beleimten Fasern wurden anschließend in einem Trockner auf eine Feuchte von ca. 8 Gew.-% getrocknet, zu einer Matte geschüttet, vorverdichtet und bei 220°C zu einer Platte gepreßt.

Die erhaltene MDF-Platte zeigte eine homogene, brillante, lichtechte Schwarzfärbung.

### 3.3. Herstellung einer blau gefärbten MDF-Platte

Dem Leimansatz aus Tabelle 3 wurden 4.7 Gew.-Tle. der Farbmittelzubereitung Nr. 1.4 zugegeben.

Die beleimten Fasern wurden anschließend in einem Trockner auf eine Feuchte von ca. 8 Gew.-% getrocknet, zu einer Matte geschüttet, vorverdichtet und bei 220°C zu einer Platte gepreßt.

Die erhaltene MDF-Platte zeigte eine homogene, brillante, lichtechte Blaufärbung.

### 3.4. Herstellung einer rot gefärbten MDF-Platte

Dem Leimansatz aus Tabelle 3 wurden 4,7 Gew.-Tle. der Farbmittelzubereitung Nr. 1.2 zugegeben.

Die beleimten Fasern wurden anschließend in einem Trockner auf eine Feuchte von ca. 8 Gew.-% getrocknet, zu einer Matte geschüttet, vorverdichtet und bei 220°C zu einer Platte gepreßt.

Die erhaltene MDF-Platte zeigte eine homogene, brillante, lichtechte Rotfärbung.

### 3.5. Herstellung einer grün gefärbten MDF-Platte

Dem Leimansatz aus Tabelle 3 wurden 2,4 Gew.-Tle. der Farbmittelzubereitung Nr. 1.1 zugegeben.

Die beleimten Fasern wurden anschließend in einem Trockner auf eine Feuchte von ca. 8 Gew.-% getrocknet, zu einer Matte geschüttet, vorverdichtet und bei 220°C zu einer Platte gepreßt.

Die erhaltene MDF-Platte zeigte eine homogene, brillante, lichtechte Grünfärbung.

### 3.6. Herstellung einer blau-schwarz-marmorierten MDF-Platte

Analog zu 3.1 und 3.3 beleimte und getrocknete Fasern wurden im Schaufelmischer im Gewichtsverhältnis Blau : Schwarz = 3 : 1 gemischt, dann zu einer Matte geschüttet, vorverdichtet und bei 220°C zu einer Platte gepreßt.

Die erhaltene MDF-Platte zeigte eine blau-schwarze Marmorierung.

### 3.7. Herstellung einer schichtweise blau-schwarz eingefärbten MDF-Platte

Analog zu 3.3 beleimte und getrocknete blau gefärbte Späne wurden zu einer Matte geschüttet und kalt vorverdichtet. Darauf wurden analog zu 3.1 beleimte und getrocknete schwarz gefärbte Fasern geschüttet und ebenfalls vorverdichtet. Die Matten wurden dann bei 220°C zu einer Platte gepreßt.

Die erhaltene MDF-Platte zeigte auf der einen Seite eine homogene, brillante Blaufärbung und auf der anderen Seite eine homogene, brillante Schwarzfärbung.

### 3.8. Herstellung einer blau-schwarz-marmorierten MDF-Platte

Analog zu 3.1 und 3.3 beleimte und getrocknete Fasern wurden im Schaufelmischer im Gewichtsverhältnis Blau : Schwarz = 3 : 1 gemischt, dann zu einer Matte geschüttet, vorverdichtet und bei 220°C zu einer Platte gepreßt.

Die erhaltene MDF-Platte zeigte eine blau-schwarze Marmorierung.

### 3.9. Herstellung einer blau-grün-rot-marmorierten MDF-Platte

Analog zu 3.3, 3.4 und 3.5 beleimte und getrocknete Fasern wurden im Schaufelmischer im Gewichtsverhältnis Blau : Grün : Rot = 1 : 1 : 1 gemischt, dann zu einer Matte geschüttet, vorverdichtet und bei 220°C zu einer Platte gepreßt.

Die erhaltene MDF-Platte zeigte eine blau-grün-rote Marmorierung.

### 3.10. Herstellung einer schwarz gefärbten, leitfähigen MDF-Platte

Es wurde der Leimansatz aus Tabelle 4 verwendet.

Die beleimten Fasern wurden anschließend in einem Trockner auf eine Feuchte von ca. 8 Gew.-% getrocknet, zu einer Matte geschüttet, vorverdichtet und bei 220°C zu einer Platte gepreßt.

Die erhaltene MDF-Platte zeigte eine homogene, brillante, lichtechte Schwarzfärbung und hatte einen Oberflächenwiderstand von 1,3 x 10⁵ Ωcm.

## Patentansprüche

1. Verwendung von flüssigen Farbmittelzubereitungen, die mindestens ein Pigment und, bezogen auf das Pigment, 0,5 bis 10 Gew.-% mindestens eines Farbstoffs enthalten, zur dekorativen Einfärbung von HDF-, MDF- und Spanplatten.

2. Verwendung nach Anspruch1, **dadurch gekennzeichnet, dass** die Zubereitungen
(A) mindestens ein Pigment,
(B) mindestens einen Farbstoff,
(C) mindestens ein Dispergiermittel,
(D) Wasser oder ein Gemisch von Wasser und mindestens einem Wasserrückhaltemittel und
(E) gewünschtenfalls weitere für Farbmittelzubereitungen übliche Bestandteile
enthalten.

3. Verwendung nach Anspruch 2, **dadurch gekennzeichnet, dass** die Zubereitungen als Komponente (B) mindestens einen anionischen oder einen kationischen Farbstoff enthalten.

4. Verwendung nach den Ansprüchen 2 bis 3, **dadurch gekennzeichnet, dass** die Zubereitungen als Komponente (C) mindestens ein nichtionisches oberflächenaktives Additiv, mindestens ein anionisches oberflächenaktives Additiv oder ein Gemisch dieser oberflächenaktiven Additive enthalten.

5. Verwendung nach den Ansprüchen 2 bis 4, **dadurch gekennzeichnet, dass** die Zubereitungen als Wasserrückhaltemittel ein schwerverdampfbares, in Wasser lösliches oder mit Wasser mischbares organisches Lösungsmittel enthalten.

6. Verwendung nach den Ansprüchen 2 bis 5, **dadurch gekennzeichnet, dass** die Zubereitungen
10 bis 70 Gew.-% der Komponente (A),
0,05 bis 7 Gew.-% der Komponente (B),
1 bis 50 Gew.-% der Komponente (C),
10 bis 88,95 Gew.-% der Komponente (D) und
0 bis 5 Gew.-% weitere für Farbmittelzubereitungen übliche Bestandteile,
jeweils bezogen auf das Gesamtgewicht der Zubereitung, enthalten.

7. Verwendung nach den Ansprüchen 1 bis 6 zur Massefärbung von MDF-, HDF- und Spanplatten.

8. Verwendung nach Anspruch 7 zur Erzeugung mehrfarbig in Schichten oder marmoriert eingefärbter Platten.

9. Verwendung nach Anspruch 7 zur Erzeugung elektrisch leitfähiger schwarzeingefärbter Platten.

10. HDF-, MDF- und Spanplatten, eingefärbt mit den Farbmittelzubereitungen gemäß den Ansprüchen 1 bis 6.

## Claims

1. The use of liquid colorant preparations comprising at least one pigment and, based on the pigment, from 0,5% to 10% by weight of at least one dye, for decorative coloration of HDF, MDF and chipboard.

2. The use according to claim 1 wherefor the preparations comprise
(A) at least one pigment,
(B) at list one dye,
(C) at least one dispersant
(D) water or a mixture of water and at least one water retainer, and
(E) optionally further customary constituents for colorant preparations.

3. The use according to claim 2 wherefor component (B) of the preparations comprises at least one anionic or cationic dye.

4. The use according to any of claims 2 to 3 wherefor component (C) of the preparations comprises at least one nonionic surface-active additive, at least one anionic surface-active or a mixture thereof.

5. The use according to any of claims 2 to 4 wherefor the water retainer of the preparations comprises a high-boiling organic solvent which is soluble in or miscible with water.

6. The use according to any of claims 2 to 5 wherefor the preparations comprise
from 10% to 70% by weight of component (A),
from 0,05% to 7% by weight of component (B),
from 1% to 50% by weight of component (C),
from 10% to 88,95% by weight of component (D), and
from 0% to 5% by weight of further customary constituents for colorant preparations,
each percentage being based on the total weight of the preparation.

7. The use according to any of claims 1 to 6 for mass coloration of MDF, HDF and chipboard.

8. The use according to claim 7 for producing colored board which is multicolored in layers or marbled.

9. The use according to claim 7 for producing electroconductive black board.

10. HDF, MDF and chipboard colored with the colorant preparations according to any of claims 1 to 6.

## Revendications

1. Utilisation de préparations liquides de colorant qui contiennent au moins un pigment et, par rapport au pigment, de 0,5 à 10% en poids d'au moins un colorant, pour la coloration décorative de panneaux de MDF, de HDF et d'agglomérés.

2. Utilisation selon la revendication 1, **caractérisée en ce que** les préparations contiennent:
(A) au moins un pigment,
(B) au moins un colorant,
(C) au moins un agent de dispersion,
(D) de l'eau ou un mélange d'eau et d'au moins un agent de rétention d'eau, et
(E) si on le souhaite d'autres constituants habituels pour des préparations de colorant.

3. Utilisation selon la revendication 2, **caractérisée en ce que** les préparations contiennent comme composant (B) au moins un colorant anionique ou un colorant cationique.

4. Utilisation selon les revendications 2 à 3, **caractérisée en ce que** les préparations contiennent comme composant (C) au moins un additif tensioactif non ionique, au moins un additif tensioactif anionique ou un mélange de ces additifs tensioactifs.

5. Utilisation selon les revendications 2 à 4, **caractérisée en ce que** les préparations contiennent comme agent de rétention d'eau un solvant organique difficilement évaporable, soluble dans l'eau ou miscible à l'eau.

6. Utilisation selon les revendications 2 à 5, **caractérisée en ce que** les préparations contiennent :
10% à 70% en poids du composant (A),
0,05% à 7% en poids du composant (B),
1% à 50% en poids du composant (C),
10% à 88,95% en poids du composant (D), et
0% v 5% en poids d'autres constituants habituels pour des préparations de colorant,
chaque fois par rapport au poids total de la préparation.

7. Utilisation selon les revendications 1 à 6 pour la coloration en masse de panneaux de MDF, de HDF et d'agglomérés.

8. Utilisation selon la revendication 7 pour la production de plaques colorées de plusieurs couleurs en couches ou marbrées.

9. Utilisation selon la revendication 7 pour la production de plaques conductrices de l'electricité colorées en noir.

10. Panneaux de MDF, de HDF et d'agglomérés colorés avec les préparations de colorant selon les revendications 1 à 6.
